# EUROPEAN PATENT SPECIFICATION

(11) **EP 3 315 027 B1**
(45) Date of publication and mention of the grant of the patent: **17.02.2021**
(21) Application number: 17196751.6
(22) Date of filing: 17.10.2017
(51) Int. Cl.: A01M 21/04

(54) **APPARATUS FOR REMOVING WEEDS AND HARMFUL PLANTS FROM THE SOIL**
VORRICHTUNG ZUR BESEITIGUNG VON UNKRAUT
DISPOSITIF POUR ÉLIMINER DES MAUVAISES HERBES

(30) Priority: 25.10.2016 IT 201600107423
(43) Date of publication of application: 02.05.2018
(73) Proprietor: CS THERMOS s.r.l., 31020 San Vendemiano - TV (IT)
(72) Inventor: CANZIAN, Sigismondo, 31020 San Vendemiano (TV) (IT)
(74) Representative: Burchielli, Riccardo

(56) References cited:
- WO-A1-00/40070
- WO-A1-97/03557
- WO-A1-98/01031
- WO-A1-2016/144795

## Description

The present invention generally relates to an apparatus for the removing weeds and harmful plants from the soil (see WO2016144795).

More in particular, the invention relates to a new apparatus for carrying out flame weeding operations on farmlands; it is called, in fact, flame weeding the work technique that allows to control and eliminate weeds, harmful plants and fungal diseases from farmland using fire.

Flame weeding is done with dry or humid heat and is currently produced with diverse methods, including electromagnetic waves, electricity, water vapor or thermal energy, in the various forms of free flame and infrared rays.

The action of the flame weeding is related to the thermal shock caused on the pests by the rapid passage of the flame or by another heat source; in fact, it causes a rapid increase in temperature within the tissue of the plant to be eliminated, causing cell membrane destruction and protein coagulation, resulting in the death of the plant within 1-3 days, depending on the climatic conditions, of the species treated and their status.

Flame weeding finds application within open field herbaceous crops, such as corn and horticulture, to combat the pests, in the herbaceous crops, for controlling unwanted grasses, suckering and sterilizating of crop residues from pathogens, and finally, in extra agricultural areas, such as green areas, parks, gardens, roads, railways, etc.).

The direct-flame heat generation technique is currently the most widespread, and the apparatus made for the flame weeding can be of a simple, i.e manual drive (over the shoulder or on a wheelbarrow), more complex, driven by a tractor and connected to a three-point linkage, or self-propelled.

In particular, we still employ an apparatus that uses LPG as a fuel, provided with burners that can produce a flame of stable shape and dimension; the flame directly hits the soil and thus the heating of the superficial layers is achieved thanks to the rapid passage of the burners.

However, the technique of the flame weeding has some negative aspects that oppose to the advantages derived from its application.

In fact, first of all, the flame weeding , likewise the chemical herbicides, presents hazardous residues for human health and a significant environmental impact due to the production of water vapor and carbon dioxide; moreover, this disadvantage gradually becomes more important as this technique is spread among professionals in the industry.

Then, among other negative aspects of the flame weeding, one should consider, for example, the limited effectiveness towards the grasses, the selective pressure exerted on tolerable species to the heat treatment, the difficulties of using flame-retardant equipment near useful plants that are sensitive or in the presence of dry vegetation, the high operating cost and reduced operating capacity.

Finally, other weeding techniques, such as mowing and / or mulching, are also complex and costly to adopt.

The object of the present invention is therefore to overcome the drawbacks mentioned above and, in particular, to provide an apparatus for the removing weeds and harmful plants from the soils which have a reduced environmental impact with respect to the prior art, while maintaining a significant effectiveness of intervention; in particular, the use of this particular apparatus avoids the increase of carbon dioxide in the environment, as there is a natural cycle with vegetation through photosynthesis.

Another object of the present invention is to provide an apparatus for the removing weeds and harmful plants from the soils, which exhibits extreme versatility of use and which allows considerable savings of combustion material compared to the types of conventional apparatuses.

Another object of the invention is to provide an apparatus for the removing weeds and harmful plants from the soils, which ensures a high reliability of operation, while at the same time permitting compliance with operating modes and operational safety in general.

Lastly, the object of the invention is to provide an apparatus for the removing weeds and harmful plants from the soils, which is easy and cost-effective compared to known techniques.

These and other objects are achieved by an apparatus for the removing weeds and harmful plants from the soils according to claim 1.

Other detail technical features are set forth in the later claims.

Further features and advantages of the present invention will become apparent from the following description, relating to a preferred and exemplary but not limiting embodiment of the apparatus for removing weed and harmful plants from the soil according to the present invention, and from the attached figures, in which:
Figure 1 is a schematic and partial view of the apparatus for the eradication of weeds and harmful plants from the soil according to the present invention;
Figure 2 is a front and partially sectional view of an enlarged detail of the apparatus of Figure 1 according to the present invention;
Figures 3, 4 and 5 show respective views of embodiments and use of the apparatus of figure 1 according to the present invention.

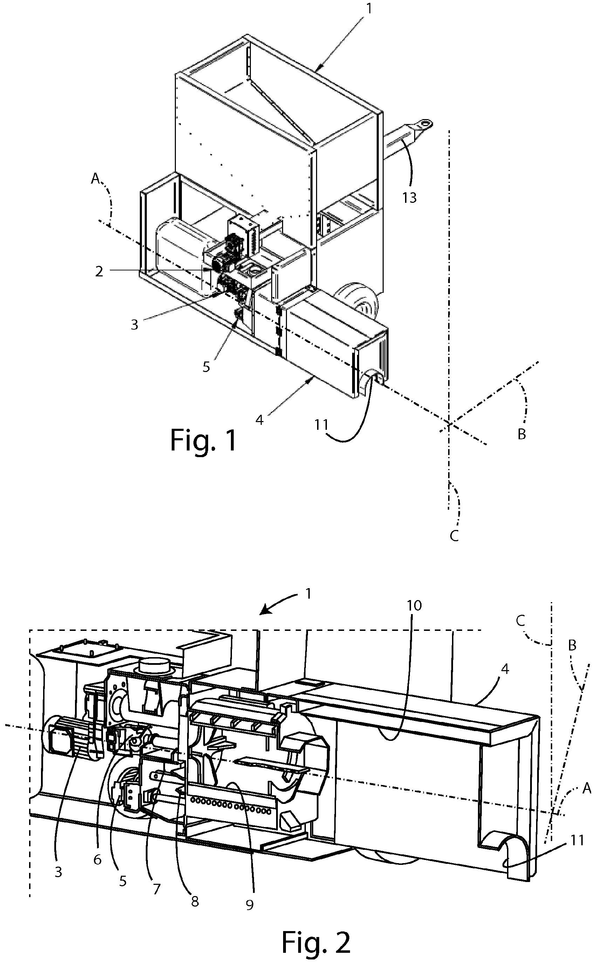

With particular reference to figures 1 and 2, the apparatus for removing weed and harmful plants, which is the object of the invention, comprises a fuel tank 1, which allows good machine autonomy and contains fuel solid, which, preferably, pellets or biomass of similar form to the pellet.

In addition, it is possible to use the waste from the farm as fuel, such as vines shoots and/or branches derived from pruning the fruit tree.

This solid fuel is extracted by means of an auger 6 driven by a motor 2 and is transported through a horizontal duct 7 to a vertical hole 8.

From here, the motor 3 pushes the solid fuel into a combustion chamber 9, where this fuel is ignited by one or more electric resistors or manually. One or more box-like structures 4 can be fixed or laterally hinged to the combustion chamber 9; in the latter case, these box-like structures 4 are angularly rotatable with respect to the longitudinal axis A of the combustion chamber 9, even though the structures 4 are further rotatable according to the vertical axis C and the axis of latitude B.

The aforementioned box-like structures 4 are used to convey the flame downwards so as to obtain the highest possible temperature on the surface of the soil needed to be flame weeded.

The motor 5, in addition, is used to move ash produced by combustion and discharge it directly into the soil serving as a fertilizer for non-harmful plants.

In particular, according to the present invention, within the box-like structure 4, which acts as a terminal of the combustion chamber 9, a conduit 10 is present, which can vary in length and width depending on the type of use and which is provided with an opening 11, also with variable size depending on the soil characteristics and/or application.

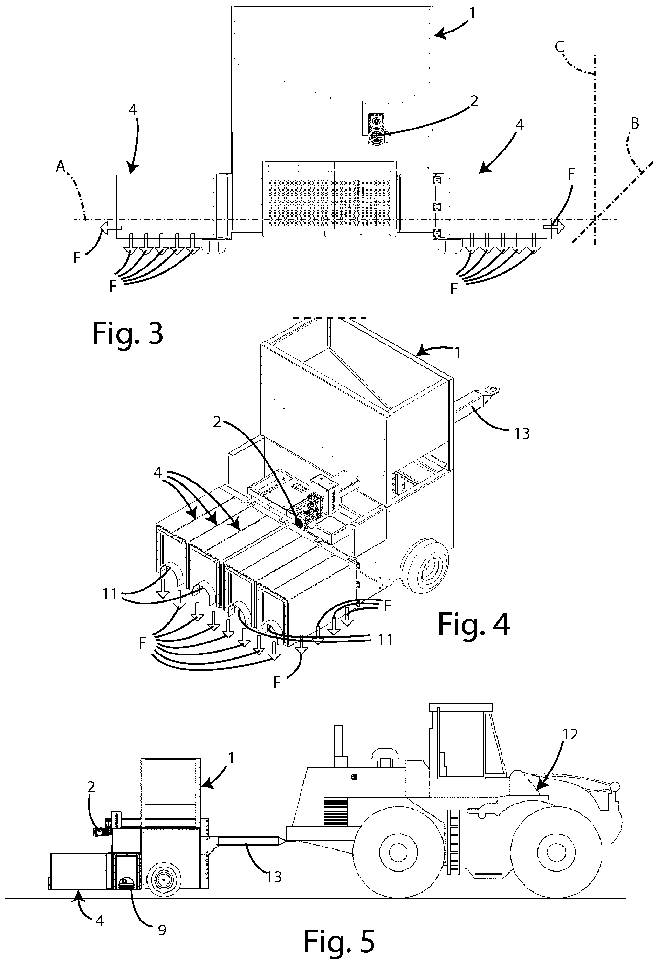

The opening 11 is present in the lower part of the duct 10 and is thus facing the ground so that the flame emerging from the opening 11, touches the ground, in the direction of the pointer F shown in the accompanying figures 3 and 4.

The apparatus of the present invention can be used by moving it manually or can be connected to a machine 12 to move it, such as a car, tractor, bulldozer, etc. (as shown in figure 5); moreover, it can be adjusted in height to approach or distant the flame to/from the soil, thus adapting it to the type of use; finally, a cardan shaft 13 can serve to provide electrical current to the apparatus; alternatively, the apparatus can be equipped with its own power generator.

The motors 2, 3 and 5 can be powered at 12 volts (hence, via its own power generator) or at 230 volts.

As shown in detail of the attached figures, showing some examples of alternative embodiments of the apparatus according to the invention, said apparatus may be provided for conveying the flame and, therefore, to weed only one side (Figure 1) or on either side (Figure 3) of the ground with respect to its own direction of travel, or along the entire width (Figure 4), rotating properly the lateral box-like structures 4 and possibly inserting further box-like structures 4 between the lateral structures 4.

The particular conformation of the combustion chamber 9 and of the duct 10 favors a controlled and uniform heating of the combustion chamber 9 and, at the same time, a high efficiency of the apparatus, which can use similarly wood, sawdust of wood, pellets, biomasses in general, such as corn seeds, soybeans, pumpkin seeds, cereals and/or other oilseeds, and blend of such materials, and in any case solid fuel material having a similar shape to the pellets with a moisture content of less than 13%. From the description it is clear that the characteristics for removing weed and harmful plants from the soil, which are the object of the present invention, as explained have advantages.

Finally, it is clear that many other variants can be made to the apparatus in question, without departing from the novelty principles inherent in the inventive as claimed, as it is clear that in the practical implementation of the invention, materials, shapes and dimensions of the illustrated details can be any depending on the needs and they can be replaced with other equivalents.

## Claims

1. Apparatus for removing weeds and harmful plants from soil, comprising a fuel tank (1) containing solid fuel, such as pellets or biomass having a shape which is similar to the pellet, an auger (6), which picks up the solid fuel from said tank (1) and delivers said solid fuel through at least one motor (2, 3), wherein one or more box-like structures (4) are fixed or hinged laterally with a duct (10) inside each box-like structure (4), **characterized in that** said solid fuel is delivered inside a combustion chamber (9) where the solid fuel is manually ignited or is ignited by means of one or more resistors, said one or more box-like structures (4) are fixed or hinged downstream of said combustion chamber (9) and said duct (10) has an opening (11) which is provided in a lower part of said structure (4), so that said opening (11) is facing towards the soil and so that a flame passes through said opening (11), said flame coming from said combustion chamber (9) and being conveyed downward from said duct (10) so as to touch on the soil.

2. Apparatus as claimed in claim 1, **characterized in that** said solid fuel is delivered from said auger (6) through a horizontal channel (7) up to a vertical hole (8), which leads to said combustion chamber (9).

3. Apparatus as claimed in claim 1, **characterized in that** said box-like structures (4) are laterally hinged to said combustion chamber (9), so as to be angularly rotatable with respect to an axis (A, B, C) of said combustion chamber (9).

4. Apparatus according to at least one of the previous claims, **characterized in that** a motor (5) drives means configured to move the ash produced within said combustion chamber (9) and able to discharge said ash on the soil.

5. Apparatus according to at least one of the previous claims, **characterized in that** said apparatus is configured to be manually moved or to be connected to a machine (12), such as a car, a tractor, a bulldozer, etc.

6. Apparatus according to at least one of the previous claims, **characterized in that** said apparatus is adjustable in height to approach or distant said flame to/from the soil.

7. Apparatus according to at least one of the previous claims, **characterized in that** said apparatus includes a condor shaft (13) which is configured to provide electrical energy or said apparatus is equipped with its own power generator.

8. Apparatus according to at least one of the previous claims, **characterized in that** said box-like structures (4) are provided on one or on both sides of the soil with respect to a direction of said apparatus or along the entire width of said apparatus.

9. Apparatus according to at least one of the previous claims, **characterized in that** said solid fuel includes wood, wood sawdust, pellets, biomasses, such as corn seed, soybean seeds, pumpkin seeds, cereals and/or other oil seeds, and mixtures of said biomasses, and in any case any solid material having a shape similar to pellets and a moisture content less than 13%.

## Patentansprüche

1. Einrichtung zum Entfernen von Unkraut und schädlichen Pflanzen aus Boden, umfassend einen Brennstofftank (1), der festen Brennstoff wie Pellets oder Biomasse mit einer Form, die ähnlich dem Pellet ist, enthält, eine Schnecke (6), die den festen Brennstoff aus dem Tank (1) aufnimmt und den festen Brennstoff durch mindestens einen Motor (2, 3) abgibt, wobei eine oder mehrere kastenartige Strukturen (4) befestigt oder seitlich mit einem Kanal (10) im Inneren jeder kastenartigen Struktur (4) angelenkt sind, **dadurch gekennzeichnet, dass** der feste Brennstoff im Inneren einer Brennkammer (9) abgegeben wird, wo der feste Brennstoff manuell gezündet oder durch einen oder mehrere Widerstände gezündet wird, wobei die eine oder mehreren kastenartigen Strukturen (4) stromabwärts der Brennkammer (9) befestigt oder angelenkt sind und der Kanal (10) eine Öffnung (11) aufweist, die in einem unteren Teil der Struktur (4) bereitgestellt ist, sodass die Öffnung (11) zu dem Boden weist und sodass eine Flamme durch die Öffnung (11) geht, wobei die Flamme von der Brennkammer (9) kommt und von dem Kanal (10) nach unten befördert wird, um auf dem Boden aufzutreffen.

2. Einrichtung nach Anspruch 1, **dadurch gekennzeichnet, dass** der feste Brennstoff von der Schnecke (6) durch einen horizontalen Kanal (7) bis zu einem vertikalen Loch (8) abgegeben wird, das zu der Brennkammer (9) führt.

3. Einrichtung nach Anspruch 1, **dadurch gekennzeichnet, dass** die kastenartigen Strukturen (4) seitlich an der Brennkammer (9) angelenkt sind, um winkelig in Bezug auf eine Achse (A, B, C) der Brennkammer (9) drehbar zu sein.

4. Einrichtung nach mindestens einem der vorstehenden Ansprüche, **dadurch gekennzeichnet, dass** ein Motor (5) Mittel antreibt, die gestaltet sind, die Asche, die in der Brennkammer (9) erzeugt wird, zu bewegen, und imstande sind, die Asche an den Boden auszugeben.

5. Einrichtung nach mindestens einem der vorstehenden Ansprüche, **dadurch gekennzeichnet, dass** die Einrichtung gestaltet ist, manuell bewegt zu werden oder mit einer Maschine (12) wie einem Auto, einem Traktor, einem Bulldozer usw. verbunden zu sein.

6. Einrichtung nach mindestens einem der vorstehenden Ansprüche, **dadurch gekennzeichnet, dass** die Einrichtung in Höhe einstellbar ist, um die Flamme an den Boden anzunähern oder von diesem zu entfernen.

7. Einrichtung nach mindestens einem der vorstehenden Ansprüche, **dadurch gekennzeichnet, dass** die Einrichtung eine Kondorwelle (13) beinhaltet, die gestaltet ist, elektrische Energie bereitzustellen, oder die Einrichtung mit ihrem eigenen Leistungsgenerator ausgestattet ist.

8. Einrichtung nach mindestens einem der vorstehenden Ansprüche, **dadurch gekennzeichnet, dass** die kastenartigen Strukturen (4) an einer oder an beiden Seiten des Bodens in Bezug auf eine Richtung der Einrichtung oder entlang der gesamten Breite der Einrichtung bereitgestellt sind.

9. Einrichtung nach mindestens einem der vorstehenden Ansprüche, **dadurch gekennzeichnet, dass** der feste Brennstoff Holz, Holzsägespäne, Pellets, Biomassen, wie Maissamen, Sojabohnensamen, Kürbissamen, Getreide- und/oder andere Ölsamen und Gemische der Biomassen und in jedem Fall ein festes Material mit einer Form ähnlich Pellets und einem Feuchtigkeitsgehalt von weniger als 13% beinhaltet.

## Revendications

1. Appareil pour l'élimination de mauvaises herbes et de plantes nuisibles du sol, comprenant un réservoir de carburant (1) contenant un combustible solide, tel que des granulés ou de la biomasse ayant une forme qui est similaire au granulé, une vis sans fin (6), qui prélève le combustible solide dudit réservoir (1) et distribue ledit combustible solide à travers au moins un moteur (2, 3), dans lequel une ou plusieurs structures en forme de boîte (4) sont fixes ou articulées latéralement avec un conduit (10) à l'intérieur de chaque structure en forme de boîte (4), **caractérisé en ce que** ledit combustible solide est distribué à l'intérieur d'une chambre de combustion (9) où le combustible solide est allumé manuellement ou est allumé au moyen d'une ou plusieurs résistances, lesdites une ou plusieurs structures en forme de boîte (4) sont fixes ou articulées en aval de ladite chambre de combustion (9) et ledit conduit (10) a une ouverture (11) qui est prévue dans une partie inférieure de ladite structure (4), de sorte que ladite ouverture (11) est tournée vers le sol et de sorte qu'une flamme passe à travers ladite ouverture (11), ladite flamme provenant de ladite chambre de combustion (9) et étant transportée vers le bas à partir dudit conduit (10) de manière à être en contact sur le sol.

2. Appareil selon la revendication 1, **caractérisé en ce que** ledit combustible solide est distribué à partir de ladite vis sans fin (6) à travers un canal horizontal (7) jusqu'à un trou vertical (8), qui mène à ladite chambre de combustion (9).

3. Appareil selon la revendication 1, **caractérisé en ce que** lesdites structures en forme de boîte (4) sont articulées latéralement sur ladite chambre de combustion (9), de manière à pouvoir tourner angulairement par rapport à un axe (A, B, C) de ladite chambre de combustion (9).

4. Appareil selon au moins l'une quelconque des revendications précédentes, **caractérisé en ce qu'**un moteur (5) entraîne des moyens configurés pour déplacer les cendres produites au sein de ladite chambre de combustion (9) et capables de décharger lesdites cendres sur le sol.

5. Appareil selon au moins l'une quelconque des revendications précédentes, **caractérisé en ce que** ledit appareil est configuré pour être déplacé manuellement ou pour être connecté à une machine (12), telle qu'une voiture, un tracteur, un bulldozer, etc.

6. Appareil selon au moins l'une quelconque des revendications précédentes, **caractérisé en ce que** ledit appareil est réglable en hauteur pour approcher ou éloigner ladite flamme du sol.

7. Appareil selon au moins l'une quelconque des revendications précédentes, **caractérisé en ce que** ledit appareil comprend un arbre condor (13) qui est configuré pour fournir de l'énergie électrique ou ledit appareil est équipé de son propre générateur de puissance.

8. Appareil selon au moins l'une quelconque des revendications précédentes, **caractérisé en ce que** lesdites structures en forme de boîte (4) sont prévues sur un ou sur les deux côtés du sol par rapport à une direction dudit appareil ou sur toute la largeur dudit appareil.

9. Appareil selon au moins l'une quelconque des revendications précédentes, **caractérisé en ce que** ledit combustible solide inclut du bois, de la sciure de bois, des granulés, des biomasses, telles que des graines de maïs, des graines de soja, des graines de citrouille, des céréales et/ou d'autres graines oléagineuses, et des mélanges desdites biomasses, et dans tous les cas tout matériau solide ayant une forme similaire à des granulés et une teneur en humidité inférieure à 13 %.
